# EUROPEAN PATENT APPLICATION

(11) **EP 1 956 420 A1**
(43) Date of publication of application: **13.08.2008**
(21) Application number: 08002120.7
(22) Date of filing: 05.02.2008
(51) Int. Cl.: G02F 1/1335, G02F 1/139, G02F 1/1333

(54) **Liquid crystal device and electronic apparatus**

(30) Priority: 08.02.2007 JP 2007029045
(71) Applicant: Seiko Epson Corporation, Tokyo 160-0811 (JP)
(72) Inventor: Haruyama, Akihide, Nagano-ken 392-8502 (JP)
(74) Representative: HOFFMANN EITLE

(57) **Abstract**

A liquid crystal device includes a pair of substrates and a liquid crystal layer interposed between the substrates. The liquid crystal device has a plurality of sub-pixel areas. Each of the sub-pixel areas has a reflective-mode display area (R) and a transmissive-mode display area (T), the thickness of the liquid crystal layer in the reflective-mode display area being less than that in the transmissive-mode display area. The liquid crystal device is configured to perform display operation after changing an alignment state of liquid crystal molecules in the liquid crystal layer from a splay alignment state into a bend alignment state. In the liquid crystal device, a transmissive-mode display area is disposed along each of two facing sides of each of the reflective-mode display areas.

## Description

### BACKGROUND

### 1. Technical Field

The present invention relates to a liquid crystal device and an electronic apparatus.

### 2. Related Art

Transflective liquid crystal devices have been used as display units in portable electronic apparatuses. JP-A-2005-352134, JP-A-2006-113259, and JP-A-2006-285128 disclose transflective liquid crystal devices operating in an optically compensated bend (OCB) mode that achieves a high response speed in order to improve the quality of movies being displayed.

JP-A-2005-352134 discloses a liquid crystal device with a multi-gap structure provided beneath a reflecting electrode, in which liquid crystal molecules are given a pletilt angle of at most 10 degrees. JP-A-2006-113259 discloses a liquid crystal device with a multi-gap structure, in which a transmissive portion is provided with concave portions and convex portions for enabling a preoperative transition of liquid crystal molecules. JP-A-2006-285128 discloses a liquid crystal device in which an insulating film is provided on an electrode of a reflective portion so that voltage dependencies during transmissive display operation and during reflective display operation can be made equal, and so that the reflective portion can be made flat.

It is necessary, in an OCB-mode liquid crystal device, to change the alignment state of liquid crystal molecules from a splay alignment state into a bend alignment state upon activation and to maintain the bend alignment state during the display operation. An occurrence of transition from the bend alignment state to the splay alignment state (hereinafter referred to as a "bend-to-splay transition") may prevent the liquid crystal device from exhibiting a desired high response speed or may degrade the quality of image being displayed. However, the devices disclosed in the above-mentioned JP-A-2005-352134, JP-A-2006-113259, and JP-A-2006-285128 do not have structures for maintaining the liquid crystal molecules in a bend alignment state.

### SUMMARY

An advantage of some aspects of the invention is that it provides a transflective liquid crystal device capable of successfully maintaining liquid crystal molecules in a bend alignment state after a transition from a splay alignment state, thereby maintaining the quality of image being displayed during operation.

A liquid crystal device according to an aspect of the invention includes a pair of substrates and a liquid crystal layer interposed between the substrates. The liquid crystal device has a plurality of sub-pixel areas. Each of the sub-pixel areas has a reflective-mode display area and a transmissive-mode display area, the thickness of the liquid crystal layer in the reflective-mode display area is different from the thickness of the liquid crystal layer in the transmissive-mode display area. The liquid crystal device is configured to perform display operation after changing an alignment state of liquid crystal molecules in the liquid crystal layer from a splay alignment state into a bend alignment state. In the liquid crystal device, the liquid crystal layer in a first area along one of two facing sides of each of the sub-pixel areas and in a second area along another of the two facing sides is thicker than in the reflective-mode display area.

In a liquid crystal device that performs display operation after changing the alignment state of liquid crystal molecules in a liquid crystal layer from a splay alignment state to a bend alignment state, a voltage that is higher than a bend-stabilizing voltage Vcr, i.e., a threshold voltage at which the liquid crystal molecules are stabilized in the bend alignment state, must be applied to the liquid crystal layer so as to achieve a desired high response speed. However, the electric field acting on the liquid crystal layer in a non-display area (herein after referred to as a "peripheral portion") of a sub-pixel area is lower than that in a display area. Therefore, a bend-to-splay transition tends to occur. In particular, a rise in temperature of the liquid crystal layer shifts the bend-stabilizing voltage Vcr to a higher level, which increases the tendency of occurrence of the bend-to-splay transition. In the case of the liquid crystal device with a multi-gap structure, an area such as a reflective-mode display area where the liquid crystal layer is thinner than that in a transmissive-mode display area is greatly influenced by the alignment control force of an alignment film and tends to cause the bend-to-splay transition.

The liquid crystal device according to an aspect of the invention has a thickened portion where the liquid crystal layer is thicker than in the reflective-mode display area. The thickened portion is provided along each of the two facing sides of the sub-pixel area, among the peripheral portion of the sub-pixel area where the electric field acting on the liquid crystal layer is low. By providing the thickened portion of the liquid crystal layer near the peripheral portion of the sub-pixel area, the probability of occurrence of a bend-to-splay transition can be minimized. Even if a bend-to-splay transition occurs at the peripheral portion of a sub-pixel area, the thickened portion prevents the transition from spreading to the display area of the sub-pixel area. Thus, the liquid crystal device according to an aspect of the invention achieves display operation with a stabilized high response speed and a high image quality.

The transmissive-mode display area is preferably provided along both of the two facing sides of each of the sub-pixel areas.

The liquid crystal layer is thicker in the transmissive-mode display area than in the reflective-mode display area. Accordingly, by arranging the transmissive-mode display area along both of the two facing sides, advantages as described above can be easily achieved. Further, because the transmissive-mode display area contributes to display operation, the numerical aperture of the sub-pixel area can be maintained.

The transmissive-mode display area is preferably provided so as to surround the reflective-mode display area.

With this arrangement, the reflective-mode display area is surrounded by the transmissive-mode display area. Because no reflective-mode display area is disposed at the peripheral portion of the sub-pixel area, the bend alignment state can be steadily maintained.

A liquid crystal device according to an aspect of the invention includes a pair of substrates and a liquid crystal layer interposed between the substrates. The liquid crystal device has a plurality of sub-pixel areas. Each of the sub-pixel areas has a reflective-mode display area and a plurality of transmissive-mode display areas, the thicknesses of the liquid crystal layer in the reflective-mode display area and in each of the transmissive-mode display areas being made different from each other. The liquid crystal device is configured to perform display operation after changing an alignment state of liquid crystal molecules in the liquid crystal layer from a splay alignment state into a bend alignment state. The reflective-mode display area is disposed between the transmissive-mode display areas.

By arranging the reflective-mode display area between the transmissive-mode display areas, the transmissive-mode display areas are arranged at the peripheral portion of the sub-pixel area. This reduces the size of the reflective-mode display area to be arranged at the peripheral portion of the sub-pixel area, whereby the bend alignment state can be steadily maintained.

A transition-nucleus-forming element is preferably disposed along a peripheral portion of each of the sub-pixel areas.

This arrangement enables easy generation of nucleus (bend nucleus) for a preoperative transition at the peripheral portion of the sub-pixel area and enables an assured and rapid preoperative transition. Further, because the transition-nucleus-forming element is disposed at the peripheral portion of the sub-pixel area, the numerical aperture of the sub-pixel area can be maintained.

The transition-nucleus-forming element may be disposed between the reflective-mode display area and the transmissive-mode display area.

In a liquid crystal device with a multi-gap structure, a thickness of the liquid crystal layer is made to continuously differ between the reflective-mode display area and the transmissive-mode display area. Such a structure tends to disturb the alignment state of liquid crystal molecules. Accordingly, the provision of the transition-nucleus-forming element between the reflective-mode display area and the transmissive-mode display area more assuredly enables the generation of the transition nucleus and maintains the numerical aperture of the sub-pixel.

The transition-nucleus-forming element is preferably any one of a signal wire connected to a switching element provided in each of the sub-pixel areas, a signal wire extending in each of the sub-pixel area, or an electrode disposed in each of the sub-pixel area. That is, anything that can apply a desired voltage to the liquid crystal layer can be used as the transition-nucleus-forming element.

The transition-nucleus-forming element may be a liquid crystal portion in which liquid crystal molecules exhibit an alignment state other than the splay alignment state.

By providing such a liquid crystal portion, a disclination tends to be generated between the liquid crystal portion and the liquid crystal portion in the splay alignment state. This disclination functions as nucleus for a preoperative transition and enables an assured and rapid preoperative transition.

The liquid crystal molecules in the liquid crystal portion may exhibit a vertical alignment state or a twisted alignment state. The liquid crystal portions in either alignment states can realize a liquid crystal device capable of easily spreading a preoperative transition to the display area of the sub-pixel area.

The transition-nucleus-forming element may be a spacer that maintains a distance between the pair of substrates. Because the alignment state of liquid crystal molecules tends to be random near a spacer, a nucleus for a preoperative transition can be easily formed. Thus, a spacer may be used as the transition-nucleus-forming element.

An electronic apparatus according to an aspect of the invention includes the liquid crystal device described above. Because the liquid crystal device effectively prevents display defects caused by a bend-to-splay transition, an electronic apparatus having a high image quality and high-response-speed display can be realized.

### BRIEF DESCRIPTION OF THE DRAWINGS

The invention will be described with reference to the accompanying drawings, wherein like numbers reference like elements. The components in the drawings are not necessarily to scale for the sake of clarity.

Fig. 1A is a plan view of a liquid crystal device according to a first embodiment and FIG. 1B is a sectional view taken along line IB-IB in FIG. 1A;

FIG. 2 is an equivalent circuit diagram of the liquid crystal device according to the first embodiment;

FIG. 3 is a plan view of a sub-pixel area of the liquid crystal device according to the first embodiment;

FIG. 4 is a sectional view taken along line IV-IV in FIG. 3;

FIGS. 5A and 5B are schematic views showing alignment states of liquid crystal molecules;

FIG. 6 is a plan view of a sub-pixel area of a liquid crystal device according to a first exemplary configuration of the first embodiment;

FIG. 7 is a partial plan view of a sub-pixel area of a liquid crystal device according to a second exemplary configuration of the first embodiment;

FIG. 8 is a plan view of a sub-pixel area of a liquid crystal device according to a second embodiment;

FIG. 9 is a partial plan view of the sub-pixel area according to the second embodiment, where the another exemplary configuration is applied; and

FIG. 10 is a perspective view of an exemplary electronic apparatus.

### DESCRIPTION OF EXEMPLARY EMBODIMENTS

### First Embodiment

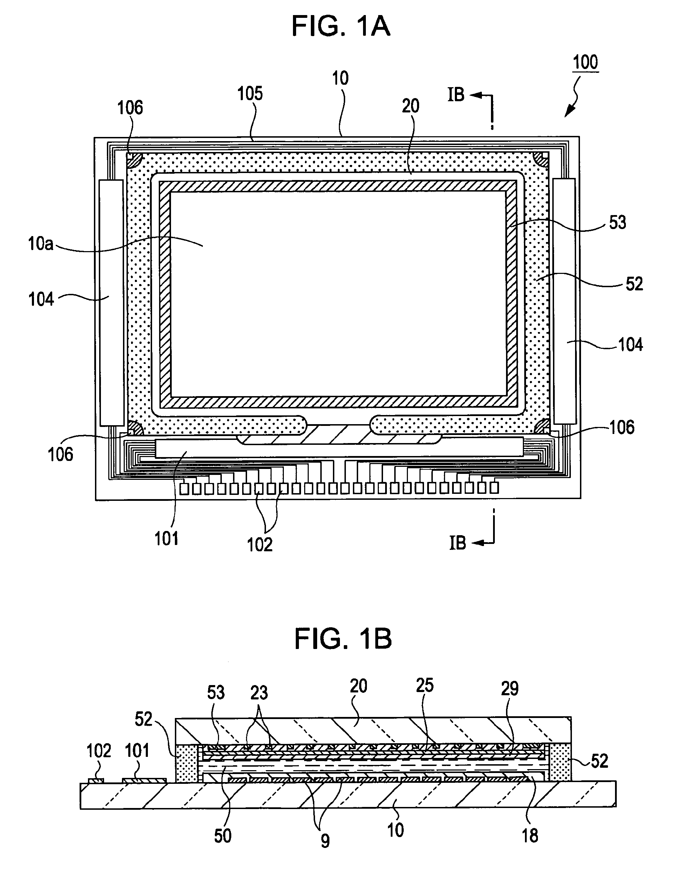

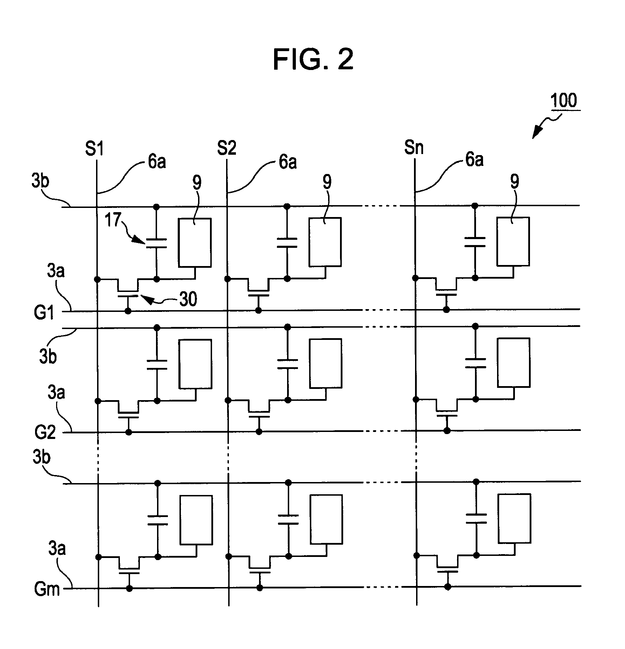

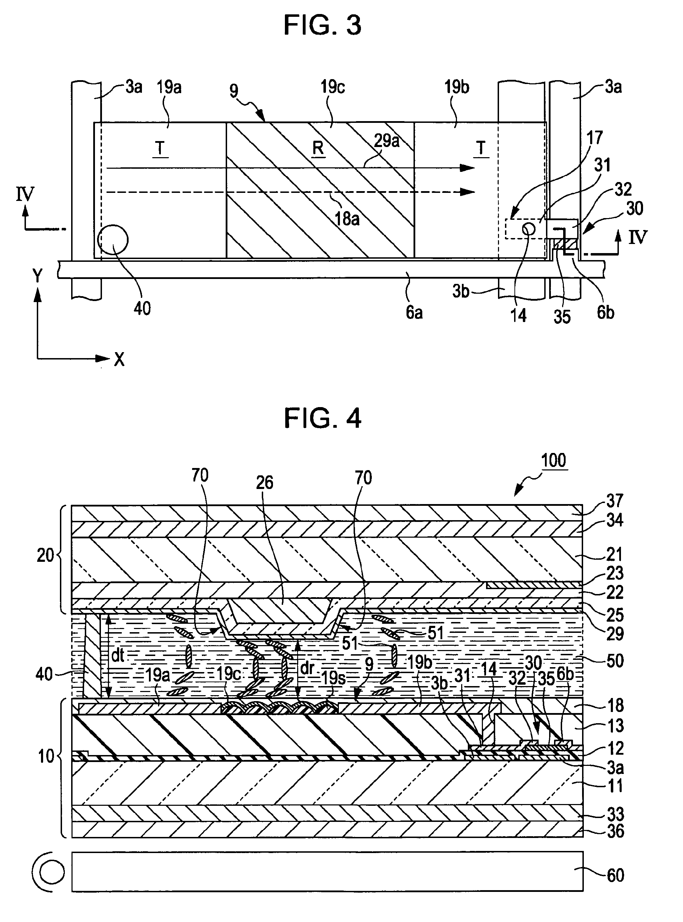

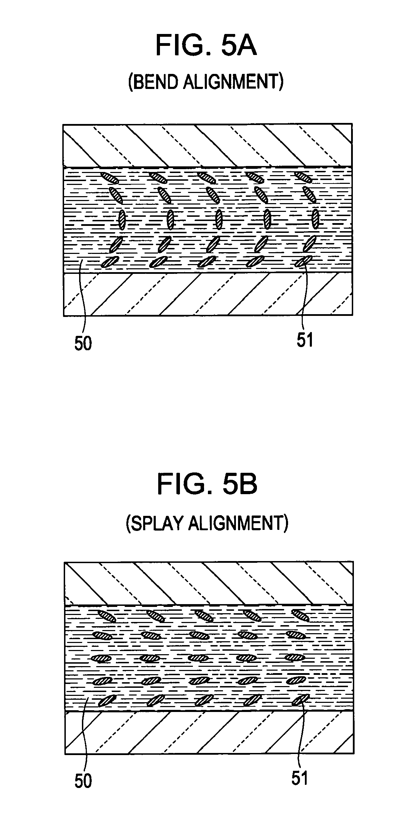

FIG. 1A is a plan view of a liquid crystal device according to a first embodiment, FIG. 1B is a sectional view taken along line IB-IB in FIG. 1A. FIG. 2 is an equivalent circuit diagram of the liquid crystal device. FIG. 3 is a plan view of a sub-pixel area. FIG. 4 is a sectional view taken along line IV-IV in FIG. 3. FIGS. 5A and 5B are schematic views showing alignment states of liquid crystal molecules.

A liquid crystal device 100 according to the embodiment is an active-matrix transflective liquid crystal device, in which a pixel consists of three sub-pixels each of which transmits one of red (R), green (G) and blue (B) light. Herein, the smallest display area constituting a display is referred to as a "sub-pixel area", and a display area consisting of three sub-pixels is referred to as a "pixel area".

Referring to FIG. 1, a liquid crystal device 100 has an element substrate (first substrate) 10, an opposing substrate (second substrate) 20 that is facing the element substrate 10, and a liquid crystal layer 50 interposed between the element substrate 10 and the opposing substrate 20. The element substrate 10 and the opposing substrate 20 are bonded together with a sealant 52, and the liquid crystal layer 50 is sealed in an area defined by the sealant 52. A peripheral allowance 53 is provided along the inner periphery of the sealant 52. An area defined by the peripheral allowance 53 and having a rectangular shape in the plan view (view in the direction in which the element substrate 10 is viewed through the opposing substrate 20) constitutes an image display area 10a. The liquid crystal device 100 further has a data-line driving circuit 101 and scanning-line driving circuits 104 provided near the sealant 52 provided at positions outside of the liquid crystal layer 50, connecting electrodes 102 that electrically connect the data-line driving circuit 101 and the scanning-line driving circuits 104, and wires 105 that connect the scanning-line driving circuits 104.

Referring to FIG. 2, the image display area 10a of the liquid crystal device 100 includes a plurality of sub-pixel areas arranged in a matrix form in the plan view. Each of the sub-pixel areas is provided with a pixel electrode 9 and a thin-film transistor (TFT) 30 for switch-controlling the pixel electrode 9. The image display area 10a further includes a plurality of data lines 6a and scanning lines 3a extending so as to form a grid pattern.

The TFTs 30 have source electrodes connected to the data lines 6a, gate electrodes connected to the scanning lines 3a, and drain electrodes connected to the pixel electrodes 9. The data lines 6a are connected to the data-line driving circuit 101 and transmit image signals S1, S2, ..., Sn, which are supplied from the data-line driving circuit 101, to the sub-pixel areas. The scanning lines 3a are connected to the scanning-line driving circuit 104 and transmit scanning signals G1, G2, ..., Gm, which are supplied from the scanning-line driving circuit 104, to the sub-pixel areas.

The data-line driving circuit 101 supplies the image signals S1 to Sn to the data lines 6a line-sequentially. Alternatively, the data lines 6a may be divided into groups of adjacent data lines, and the image signals S1 to Sn may be supplied to each of the groups. The scanning-line driving circuits 104 supply pulsed scanning signals G1 to Gm to the scanning lines 3a line-sequentially at a predetermined timing.

In the liquid crystal device 100, when the TFTs 30 that function as the switching elements are turned on for a certain period receiving the scanning signals G1 to Gm, the image signals S1 to Sn transmitted from the data lines 6a are applied to the pixel electrodes 9 at a predetermined timing. The pixel electrodes 9 then apply the image signals S1 to Sn of a predetermined level to the liquid crystal layer 50. The image signals S1 to Sn are held for a certain period between the pixel electrodes 9 and a common electrode, which will be described below, that are facing each other with the liquid crystal layer 50 interposed therebetween.

To prevent a leakage of the image signals S1 to Sn held between the pixel electrodes 9 and the common electrode, storage capacitors 17 are provided so as to next to liquid crystal capacitors provided between the pixel electrodes 9 and the common electrode. The storage capacitors 17 are provided between the drain electrodes of the TFTs 30 and the capacitor lines 3b.

Referring to FIGS. 3 and 4, a detailed structure of the liquid crystal device 100 will be described. Referring to FIG. 3, the lengthwise directions of a rectangular sub-pixel area and the pixel electrode 9, in which the data line 6a is extending, is defined as the X-axis direction, and the widthwise direction of the sub-pixel area and the pixel electrode 9, in which the scanning line 3a and the capacitor line 3b are extending, is defined as the Y-axis direction.

Referring to FIG. 4, the liquid crystal device 100 has the element substrate 10 and the opposing substrate 20 that are facing each other with the liquid crystal layer 50 interposed therebetween. The liquid crystal device 100 further has a retardation film 33 and a polarizing film 36 that are disposed on the outer surface of the element substrate 10, i.e., the surface opposite the liquid crystal layer 50, and a retardation film 34 and a polarizing film 37 that are disposed on the outer surface of the opposing substrate 20, i.e., the surface opposite the liquid crystal layer 50. The liquid crystal device 100 further has a lighting unit 60 disposed near the outer surface of the polarizing film 36. The lighting unit 60 emits illuminating light through the element substrate 10. The liquid crystal layer 50 operates in the OCB mode. That is, as shown in FIG. 4, liquid crystal molecules 51 exhibit a substantially arc-shaped formation, i.e., a bend alignment state, during operation of the liquid crystal device 100.

Referring again to FIG. 3, the sub-pixel areas is provided with the pixel electrode 9 of a rectangular shape extending in one direction (the X-axis direction) in the plan view. The data line 6a extends along the longer side of the pixel electrode 9, and the scanning line 3a extends along the shorter side of the pixel electrode 9. The capacitor line 3b extends along the scanning line 3a on the side adjacent to the pixel electrode 9.

The pixel electrode 9 consists of two transparent electrodes 19a, 19b, and one reflecting electrode 19c that are arranged along the length of the sub-pixel area. The transparent electrodes 19a, 19b, and the reflecting electrode 19c are electrically connected to each other. The transparent electrodes 19a and 19b are arranged at both ends of the sub-pixel area, and the reflecting electrode 19c is arranged between them.

In the embodiment, within the area provided with the transparent electrodes 19a and 19b, the area through which the illuminating light emitted from the lighting unit 60 passes, is referred to as a transmissive-mode display area T. In the transmissive-mode display area T, an image is displayed utilizing the illuminating light. The area provided with the reflecting electrode 19c is referred to as a reflective-mode display area R. In the reflective-mode display area R, an image is displayed by reflecting external light.

The transparent electrodes 19a and 19b are made of transparent conductive films such as indium tin oxide (ITO) films. The reflecting electrode 19c is made of a light-reflecting metal film such as an aluminum film or a silver film. The transparent electrode 19b is disposed so as to partially overlap the capacitor line 3b, and the transparent electrode 19a is disposed so as to partially overlap the scanning line 3a provided for the adjacent sub-pixel area. A connecting portion that connects the pixel electrode 9 and the TFT 30 is provided on the portion where the transparent electrode 19b overlaps the capacitor line 3b. A spacer 40 that maintains the distance between the element substrate 10 and the opposing substrate 20, i.e., the thickness of the liquid crystal layer 50, is disposed in an area which overlaps the transparent electrode 19a, at a position near the intersection of the scanning line 3a and the data line 6a. Alternatively, the spacer 40 may be disposed above a signal wire such as the scanning line 3a or the data line 6a, or in the reflective-mode display area R.

The TFT 30, which is the switching element, is disposed above the scanning line 3a. The TFT 30 consists of an independently provided semiconductor layer 35 made of an amorphous silicon film, a source electrode 6b, and a drain electrode 32. The source electrode 6b and the drain electrode 32 are disposed so as to partially overlie the semiconductor layer 35. The scanning line 3a is positioned below the semiconductor layer 35 and functions as a gate electrode of the TFT 30.

The source electrode 6b is electrically connected to the data line 6a at the end opposite the semiconductor layer 35. The drain electrode 32 forms a capacitor electrode 31 at the side opposite the semiconductor layer 35. The capacitor electrode 31 is disposed above the capacitor line 3b. The storage capacitor 17 that uses the capacitor electrode 31 and the capacitor line 3b as its electrodes is disposed in this area. The pixel electrode 9 and the capacitor electrode 31 are electrically connected through a pixel contact hole 14 provided in a planarizing layer 13, which will be described below, on the capacitor electrode 31. Therefore, the drain electrode of the TFT 30 and the pixel electrode 9 are electrically connected.

Referring again to FIG. 4, the element substrate 10 has a substrate body 11 made of a transmissive material, such as glass, silica glass, or plastic. The inner surface of the substrate body 11, i.e., the surface adjacent to the liquid crystal layer 50, is provided with the scanning line 3a, the capacitor line 3b, a gate-electrode-insulating film 12 that covers the scanning line 3a and the capacitor line 3b, the semiconductor layer 35 facing the scanning line 3a with the gate-electrode-insulating film 12 interposed therebetween, the source electrode 6b (the data line 6a) connected to the semiconductor layer 35, the drain electrode 32, and the capacitor electrode 31 connected to the drain electrode 32 and facing the capacitor line 3b with the gate-electrode-insulating film 12 interposed therebetween. In other words, the TFT 30 and the storage capacitor 17 connected thereto are disposed on the substrate body 11.

The planarizing layer 13 is disposed over the substrate to cover the irregularities caused by the presence of the TFT 30 and to make a uniform surface. The pixel contact hole 14 penetrates the planarizing layer 13 to provide an electrical connection between the capacitor electrode 31 and the pixel electrode 9 disposed on the planarizing layer 13.

A resin film 19s having an irregular surface is disposed between the reflecting electrode 19c of the pixel electrodes 9 and the planarizing layer 13. The reflecting electrode 19c also has an irregular surface similar to the surface of the underlying resin film 19s. Thus, the reflecting electrode 19c functions as a scattering-reflection layer that scatters and reflects incident light.

The pixel electrode 9 is covered by an alignment film 18. The alignment film 18 is, for example, a polyimide film that has been subjected to a rubbing treatment in the lengthwise (the X-axis direction) direction of a sub-pixel area. Because of this alignment film 18, the liquid crystal molecules 51 are orientated in an alignment direction 18a shown by a dashed arrow in FIG. 3.

The opposing substrate 20 has a substrate body 21 made of a transmissive material, such as glass, silica glass, or plastic. The inner surface of the substrate body 21, i.e., the surface adjacent to the liquid crystal layer 50, is provided with a black matrix 23 disposed at the peripheral portion of the sub-pixel area and a color filter 22 including color-material layers corresponding to colors of the sub-pixel areas. The color filter 22 is provided with a thickness-adjusting layer 26 that partially changes the thickness of the liquid crystal layer within the sub-pixel area. The thickness-adjusting layer 26 is provided at a position facing the reflecting electrode 19c on the element substrate 10, i.e., in the reflective-mode display area R, in the plan view. The surface of the color filter 22 provided with the thickness-adjusting layer 26 may be covered by a planarizing layer made of, for example, a resin material, to make the surface uniform.

The thickness-adjusting layer 26 and the color filter 22 are covered by a common electrode 25 made of a transparent conductive material such as indium tin oxide. The common electrode 25 covers a plurality of sub-pixel areas. The common electrode 25 is covered by an alignment film 29. The alignment film 29 is, for example, a polyimide film that has been subjected to a rubbing treatment in the lengthwise (the X-axis direction) direction of a sub-pixel area. Because of the presence of this alignment film 29, the liquid crystal molecules 51 are orientated in an alignment direction 29a shown by a solid arrow in FIG. 3.

The liquid crystal device 100 according to the embodiment has the above-described structure and is a transflective display device that has both the reflective-mode display area R and the transmissive-mode display area T in one sub-pixel area. The liquid crystal device 100 has a multi-gap structure in which the thickness-adjusting layer 26 is provided in the reflective-mode display area R. Because the thickness-adjusting layer 26 partially projects from the surface of the opposing substrate 20 into the liquid crystal layer 50, the thickness dr of the liquid crystal layer in the reflective-mode display area R is smaller than the thickness dt of the liquid crystal layer in the transmissive-mode display area T. The thickness dr is about half the thickness dt. The use of the multi-gap structure substantially equalizes retardations of the liquid crystal layer 50 in the reflective-mode display area R and in the transmissive-mode display area T. Thus, displaying of an image that is uniform in both the reflective-mode display area R and the transmissive-mode display area T can be achieved.

The polarizing films 36 and 37 are disposed in such a manner that their transmission axes are orthogonal to each other. The retardation films 33 and 34 disposed on the inner surfaces of the polarizing films 36 and 37, respectively, are λ/4 retardation films that change the phase of the light transmitted therethrough by substantially 1/4 wavelength. Alternatively, the retardation films 33 and 34 may be ones formed by stacking a λ/4 retardation film and a λ/2 retardation film.

It is possible that an optical compensation film be further disposed on the inner surface of at least one of the polarizing films 36 and 37. The optical compensation film serves to enhance the contrast of an image. Examples of the material for the optical compensation film include a negative uniaxial medium, i.e., a medium having negative refractive index anisotropy such as one composed of optically negative discotic liquid crystal molecules oriented in hybrid alignment state, and a positive uniaxial medium, i.e., a medium having positive refractive index anisotropy such as one composed of optically positiive nematic liquid crystal molecules oriented in hybrid alignment state. The optical compensation film may also be made of a combination of the negative and positive uniaxial media, or a biaxial medium whose refractive indexes in x, y, and z directions have a relationship of nx > ny > nz.

Now, a preoperative transition in the OCB-mode liquid crystal device 100 will be described with reference to the drawings. FIGS. 5A and 5B illustrate alignment states of liquid crystal molecules.

In the OCB-mode liquid crystal device, the preoperative alignment state (the alignment state in non-operating time) of the liquid crystal molecules 51 is a splay alignment state, i.e., a splayed-out formation, as shown in FIG. 5B. During display operation, the liquid crystal molecules 51 exhibit a bend alignment state, i.e., a curved formation, as shown in FIG. 5A. The liquid crystal device 100 modulates the transmissivity by changing the degree of the curve during operation and achieves a high response speed.

Because the liquid crystal device 100 operates in the OCB mode, the liquid crystal molecules exhibit the splay alignment state as shown in FIG. 5B when the power is OFF. Therefore, a so-called preoperative transition is necessary in which a voltage that is equal to or higher than a threshold voltage is applied to the liquid crystal layer 50 upon activation. The application of the voltage changes the alignment state of the liquid crystal molecules from the splay alignment state (preoperative state) as shown in FIG. 5B to the bend alignment state (operative state) as shown in FIG. 5A. An imperfect preoperative transition may result in display defects or a failure to achieve a desired high response speed. The preoperative transition of the liquid crystal molecules may be performed by activating the scanning lines 3a line-sequentially while applying a pulse voltage between the pixel electrode 9 and the common electrode 25.

In the liquid crystal device 100 according to the embodiment, a core for making the alignment state of liquid crystal molecules change into the bend alignment state (a nucleus for the preoperative transition) can be created by applying a pulsed voltage. The nucleus is created in an area between the scanning line 3a and the pixel electrode 9, an area between the data line 6a and the pixel electrode 9, or near the spacer 40 where the alignment state of the liquid crystal molecules is random. The nucleus for the preoperative transition spread to the area over the pixel electrode 9, thereby making the alignment state of liquid crystal molecules in the overall sub-pixel area change into the bend alignment state.

As already described, the liquid crystal device 100 performs display operation by applying a voltage to the liquid crystal layer 50 while maintaining the liquid crystal molecules in the bend alignment state. Therefore, the voltage for switching the alignment state of the liquid crystal molecules needs to be equal to or higher than the bend-stabilizing voltage Vcr, at which the bend alignment state of the liquid crystal molecules can be steadily maintained. It may result in display defects or a failure to achieve a desired high response speed, if a bend-to-splay transition of the liquid crystal molecules occurs due to application of a voltage that is lower than the bend-stabilizing voltage Vcr to the liquid crystal layer 50.

In the liquid crystal device 100 according to the embodiment, the transmissive-mode display areas T are arranged on both sides of the reflective-mode display area R as shown in FIG. 3. This arrangement effectively prevents the bend-to-splay transition of the liquid crystal molecules. Detailed description will be made below.

The alignment directions 18a and 29a of the alignment films 18 and 29, respectively, are parallel to each other in the liquid crystal device 100. The alignment control force of these alignment films 18 and 29 normally makes the liquid crystal molecules of the liquid crystal layer 50 align in the splay alignment state. The alignment control force of these alignment films 18 and 29 that acts on the liquid crystal molecules in the reflective-mode display area R, where the liquid crystal layer 50 is thinner than in the transmissive-mode display area T, is larger than in the transmissive-mode display area T. Therefore, the bend alignment state of the liquid crystal molecules in the reflective-mode display area R tends to return to the splay alignment state. In contrast, the alignment control force of these alignment films 18 and 29 in the transmissive-mode display area T is smaller than in the reflective-mode display area R. Therefore, the bend alignment state of the liquid crystal molecules in the transmissive-mode display area T can be easily maintained.

It is also easy to maintain the bend alignment state of the liquid crystal molecules in the area provided with the pixel electrode 9 because the liquid crystal layer 50 is constantly applied with a voltage during display operation. However, the electric field that acts on the liquid crystal layer 50 is low in the area outside of the pixel electrode 9, i.e., the peripheral portion of the pixel electrode 9, compared to the area above the pixel electrode 9. Therefore, in this area, the bend-to-splay transition tends to occur.

In the liquid crystal device according to an aspect of the invention, a first transmissive-mode display area T is disposed along one of two facing sides of each of the sub-pixel areas, and a second transmissive-mode display area T is disposed along another of two facing sides. The liquid crystal layer in each of the transmissive-mode display areas is thicker than in the reflective-mode display area. Therefore, even if a bend-to-splay transition occurs at the peripheral portion of the sub-pixel area, the thickened portion, in which the bend alignment state of the liquid crystal molecules can be easily maintained, prevents the bend-to-splay transition from spreading to the display area of the sub-pixel area. Because the thickened portion having a certain area is provided at the peripheral portion of the sub-pixel area, the advantages as described above can be assuredly achieved.

In the liquid crystal device 100 according to the embodiment, the first transmissive-mode display area T is disposed along one of two facing shorter sides of each of the pixel electrodes 9, and the second transmissive-mode display area T is disposed along another of two facing shorter sides. The reflective-mode display area R is disposed between the transmissive-mode display areas T. More specifically, each of the transmissive-mode display areas T is arranged so as to include one of the shorter sides of the pixel electrodes 9 extending along the scanning line 3a and a part of the longer sides joined to the shorter sides. The reflective-mode display area R, where the liquid crystal layer is thin, is arranged so as to include a part of the longer sides of the pixel electrode 9.

According to the embodiment, the transmissive-mode display areas T, where the liquid crystal layer is thick, are arranged in the large area of the peripheral portion of the pixel electrode 9. This arrangement effectively prevents the bend-to-splay transition of the liquid crystal molecules, if occurring at the peripheral portion on the scanning line 3a and the data line 6a, from spreading to the display area of the sub-pixel area.

A rise in temperature of the liquid crystal layer 50 shifts the bend-stabilizing voltage Vcr to a higher level, which increases the probability of occurrence of the bend-to-splay transition in the peripheral portion, where the electric field that acts on the liquid crystal layer 50 is low. In the liquid crystal device 100 according to the embodiment, the transmissive-mode display areas T are arranged on both ends of the pixel electrode 9 to prevent the bend-to-splay transition of the liquid crystal molecules occurred at the peripheral portion of the sub-pixel area from spreading to the area over the pixel electrode 9. Accordingly, even if a change in environmental temperature causes a bend-to-splay transition, a high image quality and high-response-speed display can be achieved.

In the liquid crystal device 100 according to the embodiment, the thickness-adjusting layer 26 is provided on the substrate body 21 of the opposing substrate 20, on the surface adjacent to the liquid crystal layer 50. However, the thickness-adjusting layer 26 may be provided on the substrate body 11 of the element substrate 10, on the surface adjacent to the liquid crystal layer 50. Alternatively, the thickness-adjusting layer 26 may be provided on both the element substrate 10 and the opposing substrate 20.

### Other Exemplary Configurations according to the First Embodiment

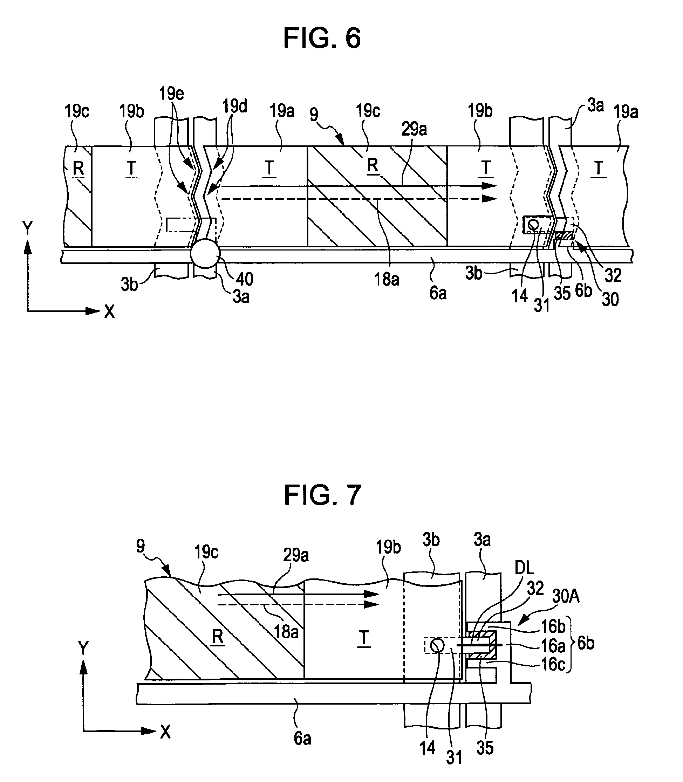

Referring to FIGS. 6 and 7, other exemplary configurations of the liquid crystal device according to the first embodiment will be described.

FIG. 6 is a schematic plan view of a sub-pixel area of a liquid crystal device according to a first exemplary configuration of the embodiment. FIG. 7 is a partial schematic plan view of a sub-pixel area of a liquid crystal device according to a second exemplary configuration of the embodiment.

The liquid crystal device according to the first exemplary configuration has the same configuration as the first embodiment except for the shape of the pixel electrode 9. The liquid crystal device according to the second exemplary configuration has the same configuration as the first embodiment except for the configuration of the TFT, which is the switching element. Therefore, in FIGS. 6 and 7, like components described in the first embodiment are denoted by like reference numerals, and detailed description thereof will not be made.

### First Exemplary Configuration

Referring to FIG. 6, the sub-pixel area of the liquid crystal device according to the first exemplary configuration is provided with the pixel electrode 9, which has the transparent electrodes 19a and 19b and the reflecting electrode 19c, the TFT 30, and the signal wires (the scanning line 3a, the capacitor line 3b, and the data line 6a). In the exemplary configuration, the shorter sides (the sides extending substantially in the Y-axis direction) of the pixel electrode 9 have jagged shapes. The sides of the transparent electrodes 19a and 19b have jagged shapes that are complementary to each other so that shorter sides of the adjacent pixel electrodes 9 can be interlocked with each other. The scanning line 3a and the capacitor line 3b also have jagged shapes so as to conform to the shape of the shorter sides of the pixel electrode 9 adjacent to them.

In the liquid crystal device according to the first exemplary configuration, the shorter sides of the pixel electrode 9 have jagged shapes. Therefore, a plurality of horizontal electric field (an electric field in the direction along the substrate surface) can be generated in a preoperative transition between the scanning line 3a and the pixel electrodes 9 at positions over the shorter sides of the pixel electrodes 9. When this electric field acts on the liquid crystal layer 50, disclinations are generated at jagged portions 19d and 19e formed at the shorter sides of the pixel electrode 9. Each of these disclinations becomes the nucleus for a preoperative transition. Thus, in the liquid crystal device according to the first exemplary configuration, the shorter sides of the pixel electrodes 9 function as the transition-nucleus-forming elements.

The horizontal electric field acts in the direction perpendicular to the shorter sides of the pixel electrode 9 and in the direction not parallel to the alignment directions 18a and 29a. Therefore, the liquid crystal molecules 51 near the shorter sides of the pixel electrode 9 are twisted and easily aligned into a bend alignment state. Thus, the liquid crystal device according to the exemplary configuration enables formation of the nuclei for a preoperative transition in an area between the scanning line 3a and the pixel electrode 9, whereby a preoperative transition can be smoothly and rapidly spread across the other areas.

### Second Exemplary Configuration

A liquid crystal device according to a second exemplary configuration will now be described.

The liquid crystal device according to the second exemplary configuration has, as pixel switching elements, TFTs 30A each having a double-source-electrode structure. It is possible that the structures according to the first and second exemplary configurations be combined.

Referring to FIG. 7, the sub-pixel area of the liquid crystal device according to the second exemplary configuration is provided with the TFT 30A, which is electrically connected to the pixel electrode 9. The TFT 30A consists of the independently provided semiconductor layer 35, the source electrode 6b and the drain electrode 32 that are connected to the semiconductor layer 35. The source electrode 6b consists of a wire 16a that branches off from the data line 6a and extends parallel to the scanning line 3a, a first electrode 16b, and a second electrode 16c. The first and second electrodes 16b and 16c each branch off from the wire 16a and extend onto the semiconductor layer 35. The first and second electrodes 16b and 16c each function as the source electrodes of the TFT 30A, thereby providing the TFT 30A with a double-source-electrode structure.

In the TFT 30A, the first and second electrodes 16b and 16c are disposed on both sides of the drain electrode 32 with respect to the Y-axis direction (the direction in which the scanning line 3a is extending). Activation of the TFT 30A in a preoperative transition generates electric fields over the TFT 30A, which act in the directions from the drain electrode 32 to the first electrode 16b and from the drain electrode 32 to the second electrode 16c. These electric fields act on the liquid crystal layer 50. Because these electric fields act in the directions along the substrate surface but opposite to each other, a disclination line DL is generated at the center of the width (the Y-axis direction) of the drain electrode 32 as shown in FIG. 7. This disclination line DL serves as the nucleus for a preoperative transition, whereby a preoperative transition can be spread across the other areas. Thus, in the liquid crystal device according to the second exemplary configuration, the TFT 30A functions as the transition-nucleus-forming element during a preoperative transition.

Because the electric field generated over the TFT 30A acts in the direction nor parallel to the initial alignment direction of liquid crystal molecules (i.e., the alignment directions 18a and 29a), the liquid crystal molecules over the TFT 30A are twisted. This makes the liquid crystal molecules easily change their alignment state. In the liquid crystal device according to the embodiment, the nucleus for preoperative transition can be assuredly generated above the TFT 30A, and the nucleus can be smoothly spread to the other areas. Thus, the preoperative transition can be performed rapidly and at a lower voltage.

The configurations for intensively creating a nucleus for preoperative transition as described in the above-described first embodiment and the exemplary configurations are just examples. They may be used in combination with another transition-nucleus-forming element. For example, in the liquid crystal device 100 according to the first embodiment, a projection, a recess, or an electrode slit as a transition-nucleus-forming element may be disposed in the sub-pixel area or at a position between adjacent sub-pixel areas.

In the case of the embodiment, an area between the reflective-mode display area R and the transmissive-mode display area T, at which the thickness of the liquid crystal layer gradually changes because of the presence of the thickness-adjusting layer 26, forms a slanted portion 70. The projection, recess, and electrode slit may be disposed at the slanted portion 70.

Alternatively, an electrode for creating a nucleus for preoperative transition may be separately prepared as a transition-nucleus-forming element. In that case, an electrode whose potential is controllable may be disposed above the scanning line 3a or the data line 6a located between the adjacent pixel electrodes 9. It is also possible that an electrode whose potential is controllable independently of the pixel electrode 9 be provided on the slanted portion 70.

Alternatively, a plurality of liquid crystal portions having different alignment states may be disposed in and around the sub-pixel area. This may be achieved by subjecting at least one of the alignment films 18 and 29 to multiple rubbings, or by forming the alignment films 18 and 29 from a plurality of horizontally compartmented alignment films. For example, by rubbing the alignment films 18 and 29, which are disposed in the area surrounding the pixel electrode 9, i.e., the area between the sub-pixel areas, in the direction not parallel to the alignment directions 18a and 29asub-pixel, the alignment states of liquid crystal molecules in the area of the pixel electrode 9 and the area surrounding the pixel electrode 9 can be made different from each other. It is also possible that an alignment film that aligns liquid crystal molecules in the normal direction (vertical direction) of the substrate be selectively disposed between the sub-pixel areas. In these cases, the liquid crystal portion having a different alignment state from that in the pixel electrode 9 functions as the transition-nucleus-forming element.

### Second Embodiment

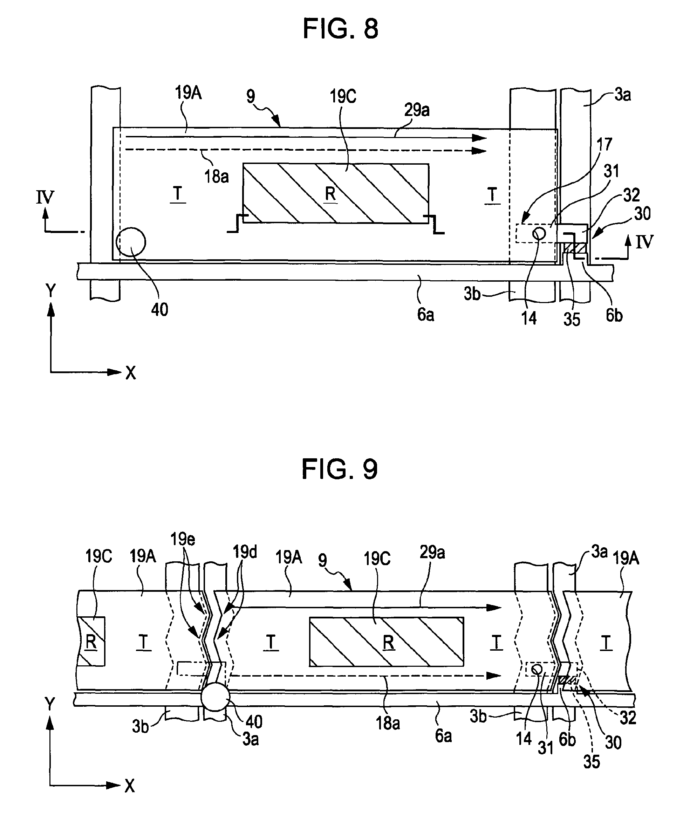

Now, referring to FIGS. 8 and 9, a liquid crystal device according to a second embodiment of the invention will be described.

FIG. 8 is a schematic plan view of a sub-pixel area of a liquid crystal device according to the second embodiment. FIG. 9 is a partial schematic plan view similar to FIG. 8, where the first exemplary configuration shown in FIG. 6 is applied.

The configuration of the liquid crystal device according to the second embodiment is similar to that of the first embodiment, except for the size and shape of the transmissive-mode display area T and the reflective-mode display area R. Therefore, in FIGS. 8 and 9, like components described in the first embodiment are denoted by like reference numerals, and detailed description thereof will not be made.

Referring to FIG. 8, a pixel electrode 9 having a reflecting electrode 19C of a rectangular shape in the plan view and a transparent electrode 19A of a rectangular frame-like shape that surrounds the reflecting electrode 19C, a TFT 30, and signal wires (a scanning line 3a, a capacitor line 3b, and a data line 6a) are disposed in a sub-pixel area of a liquid crystal device of a first exemplary configuration of the embodiment. The area provided with the reflecting electrode 19C is referred to as a reflective-mode display area R. Within the area provided with the transparent electrode 19A, the area through which the illuminating light passes, i.e., the area where the scanning line 3a, the capacitor line 3b, and a spacer 40 are not provided, is referred to as a transmissive-mode display area T.

The sectional view of the liquid crystal device according to the embodiment taken along line IV-IV in FIG. 8 is similar to FIG. 4. As shown, a thickness-adjusting layer 26 is provided at a position facing the reflecting electrode 19C. In the pixel electrode 9 of the embodiment, the reflecting electrode 19C is surrounded by the transparent electrode 19A. Therefore, the thickness-adjusting layer 26, which constitutes a multi-gap structure, is formed in a rectangular shape in the plan view and independently provided at the center of the pixel electrode 9.

In the liquid crystal device according to the embodiment, the transmissive-mode display area T, where the liquid crystal layer is thick, is arranged at the peripheral portion of the pixel electrode 9. This arrangement effectively prevents the bend-to-splay transition of the liquid crystal molecules, if occurring at the peripheral portion on the scanning line 3a and the data line 6a, from spreading to the display area of the sub-pixel area. Accordingly, even if a change in environmental temperature shifts the bend-stabilizing voltage Vcr to a higher level and causes a bend-to-splay transition at the peripheral portion, the bend-to-splay transition can be more assuredly prevented from spreading to the area over the pixel electrode 9, whereby a high image quality and high-response-speed display can be achieved.

As shown in FIG. 9, the liquid crystal device according to the embodiment may employ a pixel electrode having transition-nucleus-forming elements, i.e., jagged portions 19d and 19e formed at the shorter sides of the pixel electrode 9 along the scanning line 3a. Because these jagged portions 19d and 19e assuredly generate nuclei for a preoperative transition, a preoperative transition can be performed at a low voltage and rapidly.

It should be understood that the TFT 30A of the second exemplary configuration shown in FIG. 7 may also be employed in the liquid crystal device according to the embodiment shown in FIGS. 8 and 9. Other transition-nucleus-forming elements described in the above-described first embodiment, such as the projection, the recess, the electrode, and the alignment film, may of course be employed in the liquid crystal device according to the embodiment.

### Electronic Apparatus

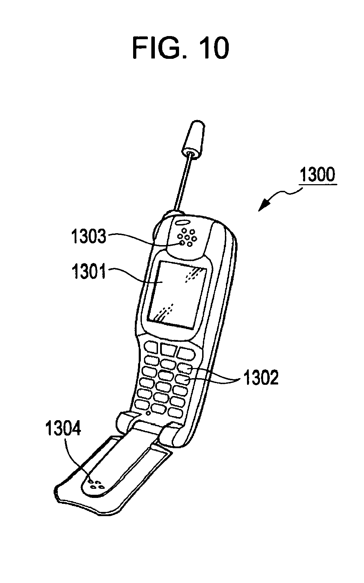

The liquid crystal device according to the above-described aspects of the invention may be used as a display unit 1301 of a portable telephone 1300 as shown in FIG. 10, for example. The portable telephone 1300 has a case that includes a plurality of operation buttons 1302, an earpiece 1303, a mouthpiece 1304, and the display unit 1301.

In the portable telephone 1300, because liquid crystal molecules can be steadily maintained in a bend alignment state, display operation is not affected by a change in environmental temperature. Thus, display operation with a high image quality and a high response speed while eliminating occurrence of defects can be achieved.

Other than a portable telephone, examples of electronic apparatuses to which the liquid crystal device according to aspects of the invention include a personal digital assistant (PDA), a personal computer, a laptop computer, a workstation, a digital still camera, an in-car monitor, a car navigation system, a head-up display, a digital camcorder, a television receiver, a videotape recorder of a viewfinder-type or a direct-view-type, a pager, an electronic organizer, a calculator, an electronic book, a projector, a word processor, a video phone, a POS terminal, equipment with touch panels, and lighting equipment.

## Claims

1. A liquid crystal device (100) comprising:
a pair of substrates (10, 20); and
a liquid crystal layer (50) interposed between the substrates,
wherein the liquid crystal device has a plurality of sub-pixel areas, each of the sub-pixel areas having a reflective-mode display area (R) and at least one transmissive-mode display area (T), the thickness of the liquid crystal layer in the reflective-mode display area is different from the thickness of the liquid crystal layer in the transmissive-mode display area, the liquid crystal device being configured to perform display operation after changing an alignment state of liquid crystal molecules in the liquid crystal layer from a splay alignment state into a bend alignment state,
wherein the liquid crystal layer in a first area along one of two facing sides of each of the sub-pixel areas and in a second area along another of the two facing sides is thicker than in the reflective-mode display area.

2. The liquid crystal device according to claim 1, wherein the transmissive-mode display area is provided in both of the two facing sides of each of the sub-pixel areas.

3. The liquid crystal device according to claim 1 or 2, wherein the transmissive-mode display area is provided so as to surround the reflective-mode display area.

4. The liquid crystal device according to any one of claims 1 to 3, wherein a transition-nucleus-forming element is disposed along a peripheral portion of each of the sub-pixel areas.

5. The liquid crystal device according to any one of claims 1 to 4, wherein the transition-nucleus-forming element is disposed between the reflective-mode display area and the transmissive-mode display area.

6. The liquid crystal device according to claim 4, wherein the transition-nucleus-forming element is any one of a signal wire connected to a switching element provided in each of the sub-pixel areas, a signal wire extending in each of the sub-pixel area, or an electrode disposed in each of the sub-pixel area.

7. The liquid crystal device according to claim 4, wherein the transition-nucleus-forming element is a liquid crystal portion in which liquid crystal molecules exhibit an alignment state other than the splay alignment state.

8. The liquid crystal device according to claim 4, wherein the transition-nucleus-forming element is a spacer that maintains a distance between the pair of substrates.

9. The liquid crystal device according to claim 7, wherein the liquid crystal molecules in the liquid crystal portion exhibit a vertical alignment state.

10. The liquid crystal device according to claim 7, wherein the liquid crystal molecules in the liquid crystal portion exhibit a twisted alignment state.

11. A liquid crystal device (100) comprising:
a pair of substrates (10, 20); and
a liquid crystal layer (50) interposed between the substrates,
wherein the liquid crystal device has a plurality of sub-pixel areas, each of the sub-pixel areas having a reflective-mode display area (R) and a plurality of transmissive-mode display areas (T), the thicknesses of the liquid crystal layer in the reflective-mode display area and in each of the transmissive-mode display area being made different from each other, the liquid crystal device being configured to perform display operation after changing an alignment state of liquid crystal molecules in the liquid crystal layer from a splay alignment state into a bend alignment state,
wherein a plurality of transmissive-mode display areas are disposed in each of the sub-pixel areas, and the reflective-mode display area is disposed between the transmissive-mode display areas.

12. An electronic apparatus comprising the liquid crystal device according to claim 1.
